# DEMANDE DE BREVET EUROPEEN

(11) **EP 3 262 997 A1**
(43) Date de publication de la demande: **03.01.2018**
(21) Numéro de dépôt: 16177225.6
(22) Date de dépôt: 30.06.2016
(51) Int. Cl.: A47J 37/07

(54) **APPAREIL DE CUISSON DE TYPE GRIL CONFIGURE POUR EMPECHER LES DEGAGEMENTS DE FUMEES DE CUISSON DANS L'ENVIRONNEMENT IMMEDIAT**

(71) Demandeur: Emery, Roger, 1950 Sion (CH)
(72) Inventeur: Emery, Roger, 1950 Sion (CH)
(74) Mandataire: Ganguillet, Cyril

(57) **Abrégé**

L'invention concerne un appareil de cuisson (10) de type gril, comprenant :
- un réceptacle (15) possédant une face supérieure sur laquelle est montée une grille de cuisson (16);
- une unité thermique (17) disposée à l'intérieur du réceptacle, en-dessous de la grille;
- une unité d'aspiration d'air (18) destinée notamment à aspirer l'air circulant au niveau de la grille, ladite unité d'aspiration étant en communication avec des moyens de circulation d'air (21) disposés à proximité et tout autour de la grille de manière à créer un rideau vertical d'air aspiré dirigé vers le bas.

## Description

### Domaine technique

La présente invention concerne un appareil de cuisson de type gril pouvant fonctionner sans diffusion de fumées de cuisson dans l'environnement immédiat.

### Etat de la technique

La plupart des appareils de cuisson actuels pour griller des aliments à feu ouvert disposés sur ou intégrés à une table de restaurant fonctionnent généralement en étant positionnés sous une hotte d'aspiration suspendue au plafond et destinée à capter les fumées et vapeurs grasses dégagées lors de la cuisson. Cette hotte est raccordée au système de ventilation centralisé à basse pression du restaurant.

Bien que cette solution améliore le confort des utilisateurs du point de vue de la gêne provoquée par les émanations de vapeurs grasses et de fumées de combustion par rapport à une simple ventilation du restaurant, elle n'empêche toutefois pas l'élimination totale desdites émanations. En outre, cette solution ne permet pas d'évacuer la chaleur rayonnée par le foyer de combustion ouvert qui est une autre source de gêne pour les utilisateurs.

Il existe par ailleurs des appareils de type barbecue destinés à être utilisés à l'extérieur et pour lesquels aucun dispositif de captation de fumées et de vapeurs grasses n'est prévu. Dans ce cas également, l'utilisation de ces appareils peut occasionner une gêne pour les utilisateurs et/ou le voisinage du fait des émanations de fumées et de vapeurs.

Pour résoudre les problèmes susmentionnés, la demande de brevet US A-2007/0062514 propose un dispositif de cuisson de type gril intégré à une table, par exemple de restaurant, la table étant munie d'une ouverture centrale à travers laquelle émerge une grille de cuisson, de niveau avec la surface supérieure de la table. Ce dispositif est équipé d'un système d'aspiration qui, au moyen d'orifices disposés à la périphérie et au niveau supérieur de la grille, aspire les fumées de combustion et les odeurs. Dans ce dispositif connu, les orifices d'aspiration sont disposés de telle manière qu'ils créent une aspiration essentiellement horizontale. Cette aspiration horizontale au-dessus de la grille a pour inconvénient, d'une part, de produire un effet de refroidissement non souhaitable sur les aliments à griller et, d'autre part, de favoriser la propagation des odeurs.

### Divulgation de l'invention

La présente invention vise donc à proposer un appareil de cuisson de type gril permettant de résoudre les problèmes susmentionnés.

A cet effet, conformément à l'invention, il est proposé un appareil de cuisson tel que défini dans la revendication 1.

D'autres caractéristiques importantes de l'appareil de cuisson de la présente invention sont également définies dans les revendications dépendantes 2 à 17.

L'appareil de cuisson ainsi configuré permettra donc de capter à la source la totalité des fumées de combustion et des vapeurs grasses de cuisson générées par la grille de cuisson. II évacuera de plus la majeure partie de la chaleur résiduelle rayonnée par le foyer de combustion ouvert.

Par ailleurs, du fait de la position spécifique des moyens d'aspiration, à savoir à proximité et sur toute la périphérie de la grille, un rideau vertical d'air aspiré dirigé vers le bas se formera tout autour de la grille, limitant ainsi de manière très importante la circulation d'air au-dessus des aliments et évitant la propagation de la fumée ou des odeurs.

En outre, dans une forme préférentielle de la présente invention, l'utilisateur pourra choisir d'aspirer les fumées de combustion uniquement au niveau de la grille ou, partiellement, en-dessous de la grille. Cette possibilité présentera l'avantage de conférer un goût et une cuisson particulière aux aliments. Le rapport entre l'aspiration haute et l'aspiration basse pourra ainsi être optimisé en fonction des aliments à griller ou en fonction des préférences des utilisateurs en matière de cuisson.

Finalement, la présente invention offrira la possibilité de rapprocher ou d'éloigner la source thermique de la grille sur laquelle repose les aliments de manière à accélérer ou, au contraire, à ralentir la cuisson, ou, dans le cas d'une cuisson au charbon de bois ou autre combustible similaire, à monter le récipient contenant le combustible de manière à compenser la baisse du niveau du combustible de par la combustion.

### Brève description des dessins

D'autres avantages et caractéristiques de la présente invention seront mieux compris à la lecture de plusieurs modes particuliers de réalisation de l'invention et en référence aux dessins dans lesquels:
- la figure 1 représente une vue en coupe longitudinale d'une première variante de réalisation d'un appareil de cuisson conforme à l'invention;
- la figure 2 représente une vue en coupe longitudinale d'une deuxième variante de réalisation d'un appareil de cuisson conforme à l'invention.

### Description détaillée d'un mode d'exécution de l'invention

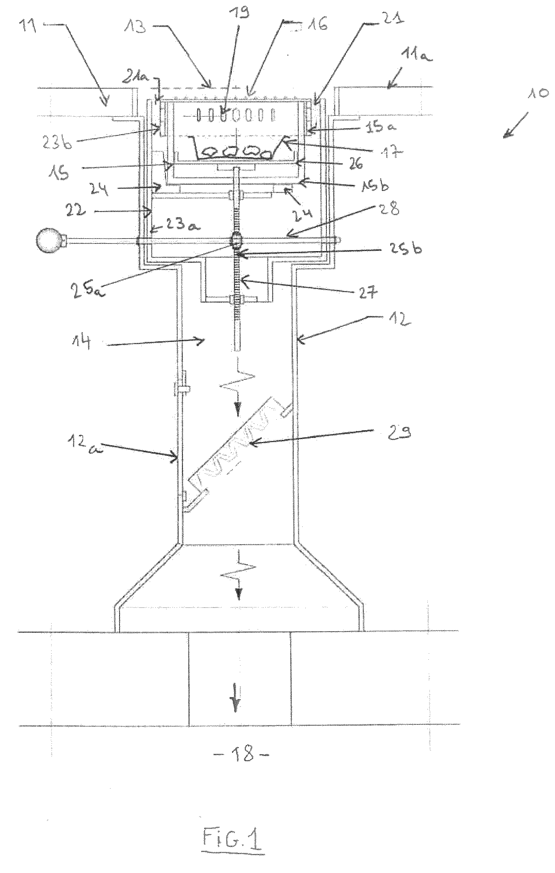

En référence à la figure 1, il est représenté une première variante de réalisation de l'appareil de cuisson selon la présente invention. Cet appareil de cuisson 10 pourra notamment servir de table de restaurant. À cet effet, il est constitué d'une table horizontale 11, sur laquelle des assiettes et des couverts pourront être posés, ladite table étant montée sur un pied-support 12 sensiblement vertical qui sera de préférence fixé au sol. La table 11 possède une ouverture centrale 13 débouchant sur sa face orientée vers le bas sur une cavité interne 14 formée à l'intérieur du pied-support 12. La cavité interne 14 est configurée pour recevoir un réceptacle 15 à la surface supérieure duquel est montée une grille 16. La grille 16 sera avantageusement positionnée au niveau de la face supérieure 11a de la table 11, ou légèrement en retrait de cette face supérieure, de manière à permettre aux utilisateurs de poser les aliments à griller sur la grille 16, sans avoir à se lever de leurs chaises. Pour assurer le positionnement correct de la grille 16, le réceptacle 15 sera posé à l'intérieur d'un logement 22 prévu à l'intérieur de la cavité interne 14, le logement 22 étant muni de moyens de calage 24 verticaux et horizontaux aptes à caler le réceptacle 15 à l'intérieur du logement 22. Le réceptacle 15 est configuré pour recevoir une unité thermique 17 dans un espace intérieur prévu au-dessous de la grille 16. Comme représentée sur la figure 1, cette unité thermique 17 pourra par exemple consister en un récipient en métal contenant des morceaux de charbon de bois incandescents. Dans une autre configuration possible, le récipient peut être remplacé par un dispositif thermique électrique. De même, d'autres combustibles pourraient être utilisés en lieu et place des morceaux de charbon de bois incandescents. La position verticale du récipient 17 à l'intérieur du réceptacle 15 pourra avantageusement être modifiée en agissant sur des moyens de déplacement formés, dans la variante représentée, par un plateau horizontal 26, sur une face supérieure duquel repose le récipient 17, et par une tige 27 fixée sur la face opposée à cette face supérieure et s'étendant verticalement vers le bas, ladite tige étant mobile dans le sens vertical au moyen d'un levier tournant 28 qui est relié à la tige par une liaison de type crémaillère ou de type vis sans fin-pignon. Dans la variante représentée, la liaison est de type crémaillère, le mouvement rotatif du levier 28 étant transmis à la tige 27 par l'intermédiaire d'un pignon denté 25a coopérant avec une série de dentures 25b de la tige. Ainsi, il sera possible pour l'utilisateur d'actionner manuellement le levier 28 de manière à lever ou abaisser le plateau 26 disposé à l'intérieur du réceptacle 15, rapprochant ou éloignant ainsi le récipient 17 de la grille 16. Le rapprochement ou l'éloignement du récipient 17 permettra notamment d'accélérer ou de ralentir la cuisson ou, dans le cas illustré sur la figure 1, de compenser la baisse du niveau de charbon de bois présent dans le récipient 17 du fait de la combustion.

De manière à éviter la propagation des fumées de combustion produites lors de la cuisson des aliments, l'appareil de cuisson 10 est avantageusement muni d'une unité d'aspiration d'air 18 qui est en communication aéraulique avec la cavité interne 14 du pied-support 12. Dans la variante représentée sur la figure 1, l'unité d'aspiration d'air 18 consiste en un ventilateur centrifuge disposé à l'extérieur du pied-support 12. Ce ventilateur pourra par exemple se trouver dans la toiture du bâtiment dans lequel est installé l'appareil de cuisson et être relié à la cavité interne 14 par un réseau de conduits de ventilation disposé dans le sous-sol ou dans le radier du bâtiment. Dans le cas où le restaurant comporterait plusieurs appareils de cuisson conformes à l'invention, il sera avantageux de réguler le débit d'air aspiré par ledit ventilateur de manière à l'adapter au nombre d'appareils en fonctionnement. La cavité interne 14 est par ailleurs en communication aéraulique avec un orifice annulaire d'aspiration 21 a débouchant au niveau de la grille 16 et disposé à proximité et à la périphérie de la grille, ledit orifice formant une des extrémités d'un canal de circulation d'air périphérique 21 disposé verticalement autour du réceptacle 15. Ce canal 21 de forme sensiblement cylindrique est délimité, d'une part, par le bord périphérique interne 23a du logement 22 et, d'autre part, par le bord périphérique externe 23b du réceptacle 15. Ainsi configuré, l'appareil de cuisson 10 permet donc de créer à la périphérie de la grille 16 un rideau vertical d'air aspiré dirigé vers le bas. Le réceptacle 15 est quant à lui muni à sa périphérie d'ouvertures radiales 19 qui font communiquer l'intérieur du réceptacle 15 avec le canal de circulation d'air périphérique 21, créant ainsi une dépression à l'intérieur du réceptacle 15 du fait de l'aspiration générée par l'unité d'aspiration 18 par l'intermédiaire du canal 21. Ainsi, les fumées dégagées lors de la cuisson pourront également être aspirées par en-dessous à travers les fentes ou les ouvertures de la grille 16. Pour permettre à l'utilisateur de moduler entre l'aspiration périphérique opérée au niveau de l'orifice d'aspiration 21 a et l'aspiration sous-jacente opérée au niveau des fentes ou ouvertures de la grille 16, le réceptacle 15 pourra avantageusement être formé de deux parties, respectivement une partie supérieure 15a intégrant la grille 16 et une partie inférieure 15b sur laquelle vient s'emboîter la partie supérieure, lesdites parties étant mobiles en rotation l'une par rapport à l'autre. Par exemple, les parties supérieure et inférieure pourront être de forme cylindrique. Les parties supérieure et inférieure seront par ailleurs munies d'ouvertures latérales 19 de forme identique, lesdites ouvertures latérales étant positionnées de telle manière à être parfaitement alignées l'une par rapport à l'autre dans une position relative particulière des parties supérieure et inférieure 15a et 15b, dite position de totale ouverture, et à être non alignées dans une autre position relative particulière desdites parties, dite position de totale fermeture. En déplaçant la partie supérieure 15a par rapport à la partie inférieure 15b entre ces deux positions relatives particulières, il sera ainsi possible de faire varier le flux d'air sortant du réceptacle, ce qui aura pour conséquence de faire varier le taux T de fumées de combustion aspirées par en-dessous par rapport à la quantité totale aspirée. Ce taux pourra par exemple varier de 0 à 50%. Ce taux aura ainsi une influence directe sur l'aliment en train d'être grillé, que ce soit au niveau du goût qu'au niveau de l'aspect. En effet, dans la position de totale fermeture mentionnée précédemment, le taux T sera de 0 %. Ainsi, toutes les fumées de combustion seront aspirées via l'orifice d'aspiration 21a. De ce fait, l'aliment aura tendance à posséder un léger goût fumé du fait du passage possible des fumées au-dessus de l'aliment avant leur aspiration par l'orifice 21 a. En revanche, dans la position de totale fermeture mentionnée précédemment, très peu de fumées auront circulé au-dessus de l'aliment et l'aliment aura un goût fumé beaucoup moins prononcé, voire aucun goût fumé. Ce réglage du taux T constitue donc un avantage supplémentaire de l'appareil de cuisson de la présente invention.

L'appareil de cuisson 10 possède par ailleurs des moyens de filtration 29 destinés à intercepter les particules de graisse contenues dans l'air aspiré avant qu'elles ne s'acheminent vers le ventilateur 18. Dans la variante représentée, ces moyens de filtration 29 consistent en un filtre à choc composé de plusieurs profilés en quinconce qui interceptent les particules de graisse par effet d'inertie et par condensation des particules sur les surfaces froides. De manière à pouvoir nettoyer ce filtre à choc, il est également prévu d'équiper le pied-support 12 d'une trappe amovible 12a que l'utilisateur pourra ouvrir depuis l'extérieur pour accéder à la cavité interne 14 du pied-support 12.

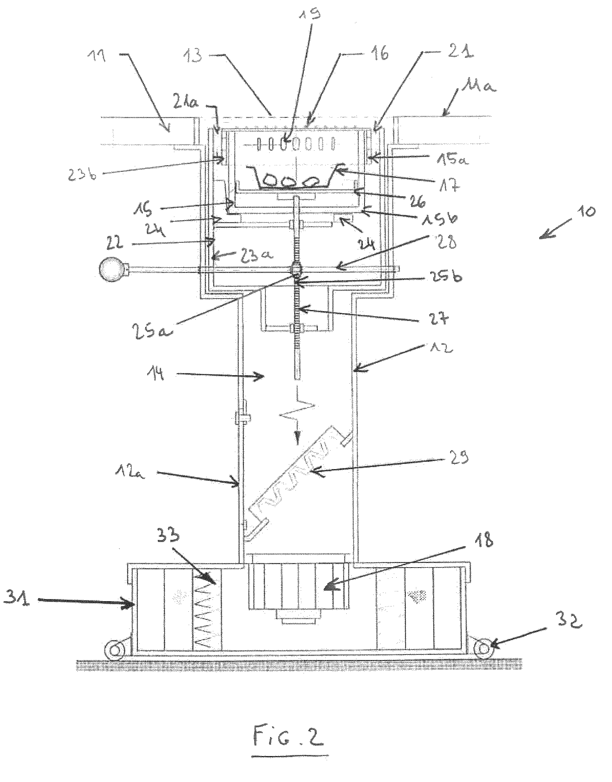

La variante représentée sur la figure 2 correspond à un appareil de cuisson 10 destiné à être utilisé à l'extérieur. Cet appareil se distingue de celui décrit précédemment par le fait que le pied-support 12 n'est pas fixé au sol mais peut se déplacer au moyen de roues ou roulettes 32 disposées sous un socle 31 formant la partie basse du pied-support 12. Le socle 31 loge un ventilateur centrifuge à débit d'air constant qui joue le rôle d'unité d'aspiration 18 au sens de l'invention. Par ailleurs, pour filtrer les odeurs dégagées par les fumées de combustion, l'appareil de cuisson 10 est avantageusement équipé d'un ou plusieurs filtres à charbon actif 33 de forme annulaire disposés à l'intérieur du socle 31.

## Revendications

1. Appareil de cuisson (10) de type gril, comprenant :
- un réceptacle (15) possédant une face supérieure sur laquelle est montée une grille de cuisson (16);
- une unité thermique (17) disposée à l'intérieur du réceptacle, en-dessous de la grille;
- une unité d'aspiration d'air (18) destinée notamment à aspirer l'air circulant au niveau de la grille, ladite unité d'aspiration étant en communication avec des moyens de circulation d'air (21) disposés à proximité et tout autour de la grille de manière à créer un rideau vertical d'air aspiré dirigé vers le bas.

2. Appareil de cuisson (10) selon la revendication 1, dans lequel l'unité d'aspiration d'air (18) est en communication aéraulique avec des premiers moyens de circulation d'air (19) de manière à aspirer l'air en-dessous de la grille et des seconds moyens de circulation d'air (21) de manière à aspirer l'air au niveau de la grille.

3. Appareil de cuisson (10) selon la revendication 2, dans lequel les premiers moyens de circulation d'air (19) sont configurés pour permettre une variation du flux d'air sortant du réceptacle (15).

4. Appareil de cuisson (10) selon la revendication 3, dans lequel le réceptacle (15) est formé d'une partie supérieure (15a) supportant la grille (16) et d'une partie inférieure (15b) sur laquelle vient s'emboîter la partie supérieure, lesdites parties inférieure et supérieure étant mobiles en rotation l'une par rapport à l'autre, chacune des parties étant munies d'ouvertures latérales (19) destinées à faire communiquer l'intérieur du réceptacle (15) avec un canal de circulation d'air périphérique (21) disposé verticalement autour du réceptacle (15), ledit canal possédant au moins une extrémité (21 a) positionnée au niveau de la grille (16), et dans lequel les ouvertures latérales (19) de la partie supérieure (15a) peuvent être plus ou moins alignées avec les ouvertures latérales (19) de la partie inférieure (15b) en fonction de la position relative des parties inférieure et supérieure de manière à permettre une variation du flux d'air sortant du réceptacle.

5. Appareil de cuisson (10) selon l'une quelconque des revendications précédentes, comprenant de plus une table horizontale (11) montée sur un pied-support (12), ladite table possédant une ouverture centrale (13) débouchant dans une cavité interne (14) dudit pied-support;
dans lequel le réceptacle (15) est disposé à l'intérieur de ladite cavité interne (14) de manière à positionner la grille (16) sensiblement au niveau de ladite ouverture centrale.

6. Appareil de cuisson (10) selon les revendications 4 et 5, dans lequel le réceptacle (15) repose dans un logement (22) formé à l'intérieur de la cavité interne (14) du pied-support (12), ledit logement formant avec ledit réceptacle ledit canal de circulation d'air périphérique (21).

7. Appareil de cuisson (10) selon la revendication 6, dans lequel le canal de circulation d'air périphérique (21) est délimité, d'une part, par un bord périphérique interne (23) du logement (22), et, d'autre part, par un bord périphérique externe (24) du réceptacle (15).

8. Appareil de cuisson (10) selon l'une des revendications 5 à 7, dans lequel le pied-support (12) est équipé d'un socle (31) monté sur roues (32), permettant ainsi un déplacement de l'appareil de cuisson sur le sol.

9. Appareil de cuisson (10) selon la revendication 8, comprenant en outre un filtre (33) à charbon actif, de forme annulaire disposé à l'intérieur du socle (31).

10. Appareil de cuisson (10) selon l'une des revendications 5 à 9, dans lequel le pied-support (12) est équipé d'une trappe amovible (12a) donnant accès à la cavité interne (14) dudit pied-support.

11. Appareil de cuisson (10) selon l'une quelconque des revendications précédentes, comprenant en outre des moyens de déplacement (25) de l'unité thermique (17) selon une direction verticale.

12. Appareil de cuisson (10) selon la revendication 11, dans lequel les moyens de déplacement (25) comprennent un plateau horizontal (26) sur lequel repose l'unité thermique (17), ledit plateau étant solidaire d'une tige (27) mobile dans le sens vertical, le déplacement de la tige s'opérant au moyen d'un levier tournant (28) relié à ladite tige par une liaison de type crémaillère ou de type vis sans fin-pignon.

13. Appareil de cuisson (10) selon l'une quelconque des revendications précédentes, comprenant en outre des moyens de filtration (29) disposés entre la grille (16) et l'unité d'aspiration (18), lesdits moyens de filtration étant aptes à intercepter les particules de graisse contenues dans l'air aspiré par l'unité d'aspiration.

14. Appareil de cuisson (10) selon la revendication 13, dans lequel les moyens de filtration (29) comprennent un filtre à choc.

15. Appareil de cuisson (10) selon l'une quelconque des revendications précédentes, dans lequel l'unité thermique (17) consiste en un récipient contenant un combustible.

16. Appareil de cuisson (10) selon l'une quelconque des revendications précédentes, dans lequel l'unité d'aspiration d'air (18) comprend un ventilateur centrifuge, le débit d'air aspiré par ledit ventilateur pouvant être modulé au moyen d'un régulateur de débit d'air.

17. Appareil de cuisson (10) selon l'une des revendications 1 à 15, dans lequel l'unité d'aspiration d'air (18) comprend un ventilateur centrifuge à débit d'air constant.
